# EUROPÄISCHE PATENTSCHRIFT

(11) **EP 2 548 789 B1**
(45) Veröffentlichungstag und Bekanntmachung des Hinweises auf die Patenterteilung: **18.06.2014**
(21) Anmeldenummer: 11005873.2
(22) Anmeldetag: 18.07.2011
(51) Int. Cl.: B62D 55/096

(54) **Raupenfahrwerk**
Track assembly
Chenille

(43) Veröffentlichungstag der Anmeldung: 23.01.2013
(73) Patentinhaber: Joseph Vögele AG, 67067 Ludwigshafen (DE)
(72) Erfinder: Braun, Arthur, 67146 Deidesheim (DE)
(74) Vertreter: Grünecker, Kinkeldey, Stockmair & Schwanhäusser

(56) Entgegenhaltungen:
- WO-A1-03/018388
- JP-A- 56 138 068
- US-A- 3 730 013
- US-A1- 2010 141 026

## Beschreibung

Die Erfindung betrifft ein Raupenfahrwerk der im Oberbegriff des Patentanspruchs 1 oder 2 angegebenen Art.

Bei dem gedämpften Leitrad eines aus US 2010/0141026 A1 bekannten, gattungsgemäßen Raupenfahrwerks sind am Umfangs-Randflansch des inneren Teils außen beidseitig Ringkörper mit Spannschrauben fixiert, die mit verbreiterten Schulterteilen nach außen über den Außenumfang des Randflansches überstehen und einen Innenflansch eines im Querschnitt T-förmigen Außenrings so zwischen sich aufnehmen, dass der Innendurchmesser des Innenflansches zum Außendurchmesser des Randflansches ein radiales Spiel hat. In nach außen offenen Aufnahmenuten der beiden Ringkörper sind an beiden Seiten des Außenrings Elastomerringe eingesetzt. Die Innenwände der Ringkörper sind gegen die Außenwände des Randflansches des inneren Teils gespannt, so dass die Außenwände des Innenflansches des Außenringes zu den Innenwänden der beiden Ringteile jeweils Axialspiel haben. Das Maß des axialen Spiels ist mit 0,5 bis 2,0 mm pro Seite angegeben.

Das Leitrad eines aus WO 03/018388 A bekannten, ebenfalls gattungsgemäßen Raupenfahrwerks weist einen im Querschnitt U-förmigen, aus einzelnen Segmenten bestehenden äußeren Teil und einen um die Achse drehbar gelagerten inneren Teil auf, der mit einem verdickten Auβenkranz in die U-Nut des äußeren Teils von innen her eingreift. Jedes Segment ist über zwei axiale Bolzen im verdickten Kranz beweglich festgelegt. Beiderseits eines mittigen, umlaufenden Bundes an der Außenseite des Kranzes sind im Querschnitt in etwa rechteckige Elastomerringe unter Vorspannung eingesetzt, die den äußeren Teil relativ beweglich auf dem inneren Teil abstützen. Die die Segmente festlegenden Querbolzen bilden eine in Umfangsrichtung formschlüssige Mitnehmerverbindung zwischen den äußeren und inneren Teilen.

Bei dem Leitrad oder Antriebskettenrad des aus US 3 730 013 A bekannten, gattungsgemäßen Raupenfahrwerks ist der jeweils äußere ringförmige Teil mit dem inneren, nabenförmigen Teil nur über dazwischengelegte, vorgespannte Elastomerringe verbunden. Im inneren Teil ist an einer Axialseite ein Pendel-Ausgleichssystem mit in Umfangsrichtung verteilten Wälzkörpern und einem von den Wälzkörpern relativ zum inneren Teil radial beweglichen Ring vorgesehen.

Zusätzlich zu den Dämpfungsringen zwischen den äußeren und inneren Teilen sind auf den äußeren Teilen außenliegende Elastomerringe in Aufnahmenuten eingeknüpft.

In einem aus JP 56138068 A bekannten Leitrad sind auf den inneren metallischen Teil umfangsseitig zwei äußere Teile so aufgespannt, dass sie eine nach außen offene Umfangsnut zwischen sich begrenzen. In der Umfangsnut ist ein unter Druck stehender elastomerer Schlauch zwischen den Innenwänden der äußeren Teile und dem Außenumfang des inneren Teils vorgesehen, der ein ringförmiges Glied aus einem reibungsaufbrauchenden Material verschieden von dem Metallmaterial der inneren und äußeren Teile radial nach außen und gegen eine Gelenkhülse eines Kettengelenks beaufschlagt. Das ringförmige Glied hat einen Doppel-T-Querschnitt.

Bei einem aus US 5 758 932 A bekannten Raupenfahrwerk ist am Außenumfang des Antriebskettenrades eine metallische Profilierung angebracht, die diamantförmige Erhebungen zum Eingriff in die Raupenkette und dazwischenliegende Kanäle besitzt. Die Umfangsprofilierung ist entweder aus dem Metallmaterial des Antriebskettenrades gebildet, oder aufgeschweißt oder angegossen.

Bei einem aus EP 2 050 664 A bekannten Raupenfahrwerk eines Straßenfertigers ist auf dem Umfang des metallischen Leitrades ein Vollgummimantel aufvulkanisiert, über den das Leitrad mit der Raupenkette in Kontakt ist.

Bei einem aus US 2007/0029878 A bekannten Raupenfahrwerk sind das Leitrad und das Antriebskettenrad durchgehend aus Metall gefertigt und erfolgt die Lastübertragung in die Fahrwerksaufhängung über metallische Kontaktflächen.

Bei dem aus US 3 647 270 A bekannten Raupenfahrwerk sind das Antriebskettenrad (Turas) und das Leitrad metallisch ausgebildet.

Die EP 0 721 879 B1 zeigt bei einem Leitrad zwei außenliegende axial voneinander separierte Gummibandagen.

Die US 2002/0113489 A zeigt am Umfang eines Laufrades eines Raupenfahrwerks Ringsegmente, die über in Gummihülsen enthaltene Querbolzen mit dem Nabenteil gekuppelt sind. Die Gummihülsen sind in schalenförmigen Ausnehmungen in den Ringsegmenten und im Umfang des Nabenteils platziert. Die Ringsegmente sind miteinander über Querbolzen beweglich gekoppelt.

Die DE 3 537 665 A betrifft ein mehrteiliges Leit- bzw. Laufrad für Raupenfahrwerke, wobei zwischen den Innen- und Außenteilen des Laufrades zwei ringförmige Dämpfungsschichten eingefügt und ein erhabener Führungsbund in der Mitte und beiderseitige Auflageschultern vorgesehen sind.

Die DE 2 617 342 A zeigt einen Turas, bei dem zwischen zwei Außenzahnkränzen, die starr mit der Nabe verbunden sind, auf der Nabe zwei Gummibandagen außen angebracht sind, auf die sich die Raupenkette abstützen kann, und zwischen denen eine Führungsvertiefung zur Seitenführung der Raupenkette freigehalten wird.

Der Erfindung liegt die Aufgabe zugrunde, ein Raupenfahrwerk der eingangs genannten Art zu schaffen, das sich im Fahrbetrieb bei stabiler Führung der Raupenkette durch geringe Betriebsgeräusche auszeichnet.

Die gestellte Aufgabe wird mit den Merkmalen des Patentanspruchs 1 oder 2 gelöst.

Von der Raupenkette auf die metallischen Teile des Antriebskettenrades oder Leitrades ausgeübte Lasten nehmen die Dämpfungsschichten auf, ohne in direktem Kontakt mit der Raupenkette zu kommen. Auf diese Weise wird eine wirksame innere Dämpfung durch Aufzehren der Energie aus den im Wesentlichen radial wirkenden Schlägen in den Dämpfungsschichten bei radialen Relativbewegungen zwischen den inneren und äußeren Teilen erzielt. Da die inneren und äußeren Teile radial relativ zueinander gleitend geführt sind, werden über die Gleitführung Schläge nicht übertragen, sondern seitliche Führungskräfte aufgebaut. Im Fahrbetrieb unweigerlich von der Raupenkette ausgeübte Schläge werden über die integrierten Dämpfungsschichten gedämpft, wodurch Betriebsgeräusche und auch Verschleiß reduziert werden. Allerdings sollte die Integration der Dämpfungsschichten so gestaltet werden, dass dennoch zumindest zwischen dem Antriebskettenrad und der Raupenkette auch metallischer Kontakt vorliegt, um die Dämpfungsschichten nicht zu überlasten oder frühzeitig zu verschleißen und vor allem, um Seitenführungskräfte zu übertragen. Hierbei ist der äußere Teil des Antriebskettenrades, der die Umfangsverzahnung aufweist und als einteilige oder aus Segmenten zusammengesetzte Ringscheibe mit einem innenliegenden umfänglichen Fußteil und wenigstens einer ersten Radialführungsstruktur ausgebildet. Der innere, vorzugsweise zur Montage teilbare, Teil des Antriebskettenrades ist mit einer zum Fußteil passenden, umfänglichen Krone mit wenigstens einer zur ersten Radialführungsstruktur passenden zweiten Radialführungsstruktur ausgebildet. Am Fußteil und an der Krone sind zueinander weisende zylindrische oder konische Stützflächen vorgesehen. Die jeweilige Dämpfungsschicht ist zwischen den Stützflächen angeordnet, gegebenenfalls mit einer Stützfläche fest verbunden. Die ersten und zweiten Radialführungsstrukturen greifen mit radialem Bewegungsspiel ineinander. Das Antriebskettenrad ist mit der radialen Gleitführung baulich einfach und funktionssicher.

Von der Raupenkette auf die metallischen Teile des Antriebskettenrades oder Leitrades ausgeübte Lasten nehmen die Dämpfungsschichten auf, ohne in direktem Kontakt mit der Raupenkette zu kommen. Auf diese Weise wird eine wirksame innere Dämpfung durch Aufzehren der Energie aus den im Wesentlichen radial wirkenden Schlägen in den Dämpfungsschichten bei radialen Relativbewegungen zwischen den inneren und äußeren Teilen erzielt. Da die inneren und äußeren Teile radial relativ zueinander gleitend geführt sind, werden über die Gleitführung Schläge nicht übertragen, sondern seitliche Führungskräfte aufgebaut. Im Fahrbetrieb unweigerlich von der Raupenkette ausgeübte Schläge werden über die integrierten Dämpfungsschichten gedämpft, wodurch Betriebsgeräusche und auch Verschleiß reduziert werden. Im Leitrad und/oder gegebenenfalls im Antriebskettenrad sind zusätzlich zwei axial außenseitig und durch einen Zwischenabstand in axialer Richtung separierte, ringförmige Dämpfungsschichten mit etwa gleichen Durchmessern vorgesehen. Im Bereich des Zwischenabstandes ist am Antriebskettenrad die metallische Umfangsverzahnung vorgesehen, hingegen am Leitrad der Führungsbund, so dass hier eine hauptsächliche Lastübertragung erfolgt, während die zusätzlichen Dämpfungsschichten schlagartige Energiespitzen aus von der Raupenkette erzeugten Schlägen abdämpfen, ohne dabei überlastet zu werden, weil auch die innenliegenden Dämpfungsschichten wirken. Diese Lösung kann speziell beim Leitrad zu einem sehr leisen Betriebsgeräusch führen. Der den Führungsbund und beidseitige Auflageschultern aufweisende äußere Teil des Leitrades ist als Tragring mit wenigstens einer innenseitigen ersten Radialführungsstruktur und zylindrischen oder konischen Stützflächen beidseits der ersten Radialführungsstruktur ausgebildet. Der auf der Achse drehbar gelagerte innere Teil des Leitrades ist als Ringnabe mit wenigstens einer zur ersten Radialführungsstruktur passenden, zweiten Radialführungsstruktur und zylindrischen oder konischen Stützflächen beidseits der zweiten Radialführungsstruktur in einer umfänglichen und zum Tragring passenden Krone ausgebildet. Zwischen den inneren und äußeren Stützflächen ist jeweils eine Dämpfungsschicht angeordnet, vorzugsweise mit einer Stützfläche fest verbunden. Die ersten und zweiten Radialführungsstrukturen greifen ausschließlich mit radialem Bewegungsspiel ineinander. Nahezu sämtliche Lasten der Raupenkette, ausgenommen die über die Gleitführung übertragenen Seitenführungskräfte, werden über die Dämpfungsschichten übertragen, so dass diese effizient dämpfen, gegebenenfalls unterstützt durch die außenliegenden zusätzlichen Dämpfungsschichten beiderseits des Führungsbundes.

Bei dem dämpfenden Material der Dämpfungsschicht handelt es sich zweckmäßig um verstärkten oder unverstärkten Elastomer, wie z. B. Polyurethan-Kautschuk, z. B. mit einer Shore A-Härte zwischen etwa 80 und etwa 92 und/oder Gummi wie Hartgummi.

Für eine gleichmäßige Kraftübertragung ist zweckmäßig die Gleitführung mit Führungsflächenpaaren axial mittig angeordnet.

Zweckmäßig ist die Krone axial breiter als der Fußteil bzw. der Tragring, sind an den Rändern der Krone radial nach außen vorspringende Ringflansche vorgesehen, die den Fußteil bzw. Tragring in axialer Richtung sichern, und zwar ohne metallischen Kontakt, weil ihr Überstand, vorzugsweise, geringer ist als die radiale Stärke der Dämpfungsschichten. Dies erhöht auch die seitliche Steifigkeit der Dämpfungsschichten.

Bei einer besonders zweckmäßigen Ausführungsform ist zwischen den inneren und äußeren Teilen des Antriebskettenrades oder sogar des Leitrades, vorzugsweise sogar zwischen den ersten und zweiten Radialführungsstrukturen, eine in Umfangsrichtung formschlüssige, in Radialrichtung spielbehaftete Mitnehmerverbindung vorgesehen. Hierfür dienen ineinandergreifende Verzahnungen. Dadurch werden in Umfangsrichtung wirkende Scherkräfte in den Dämpfungsschichten minimiert und lässt sich an den Dämpfungsschichten vorbei ein Drehmoment übertragen.

Bei einer zweckmäßigen Ausführungsform ist in dem Leitrad die Ringnabe über außenseitig abgedichtete Wälzlager auf einem die Achse definierenden Achszapfen abgestützt und an wenigstens einer Seite über eine Spannmutter, vorzugsweise mit einer Verdrehsicherung, wie einer Verstemmung, gesichert. Dies ist eine montagetechnisch günstige Lösung eines gedämpften Leitrades.

Zweckmäßig bestehen die inneren und äußeren Teile des Leitrades oder des Antriebskettenrades aus Stahl oder Stahlguss.

In einer baulich einfachen Ausführungsform weist die erste Radialführungsstruktur einen von der benachbarten Stützfläche einwärts vorspringenden Ringflansch mit annähernd rechteckigem Querschnitt auf, und weist die zweite Radialführungsstruktur eine gegenüber der Stützfläche einwärts vertiefte Ringnut ebenfalls mit annähernd rechteckigem Querschnitt auf. Eine umgekehrte Bauform ist ebenfalls möglich, d.h. ein vom inneren Teil nach außen greifender Ringflansch und eine im äußeren Teil vertiefte Ringnut. Der Ringflansch wird in der Ringnut stabil und großflächig radial geführt und entlastet die Dämpfungsschichten von gegebenenfalls schädlichen Walk- und Scherkräften. Hierbei kann direkter metallischer Kontakt vorliegen oder können die Führungsflächen Gleit- oder Schutzbeläge aufweisen.

Herstellungstechnisch günstig sind die Verzahnungen der Mitnehmerverbindung ein Innenzahnkranz am Innenumfang eines Ringflansches der ersten Radialführungsstruktur und ein Außenzahnkranz am Grund einer Ringnut der zweiten Radialführungsstruktur. Diese Zahnkränze können aus dem Material der Teile des Antriebs- oder Leitrades direkt geformt oder separat hergestellt und dann fixiert sein. Zweckmäßig handelt es sich um durch Fräsen, Stoßen oder Räumen hergestellte Zykloidenzahnkränze, die Verschmutzungen und Umgebungseinflüsse relativ gut vertragen.

Trotz der das Betriebsgeräusch minimierenden Dämpfungsschichten werden über die radiale Gleitführung scherende Querkräfte in den Dämpfungsschichten vermieden, was die Standzeit erhöht und einen stabilen, gerichteten Lauf der Raupenkette über die Räder gewährleistet.

Anhand der Zeichnungen werden Ausführungsformen des Erfindungsgegenstandes erläutert. Es zeigen:
- Fig. 1: eine schematisierte Seitenansicht eines Straßenfertigers oder Beschickers mit einem Raupenfahrwerk,
- Fig. 2: einen Radialteilschnitt einer Ausführungsform eines Leitrades des Raupenfahrwerks,
- Fig. 3: einen Radialteilschnitt eines Antriebskettenrades des Raupenfahrwerks,
- Fig. 4: einen Radialteilschnitt einer weiteren Ausführungsform eines Leitrades des Raupenfahrwerks,
- Fig. 5: eine Seitenansicht, teilweise im Schnitt, eines Teilbereiches des Raupenfahrwerks, und
- Fig. 6: eine Detailvariante zu Fig. 2, teilweise im Schnitt.

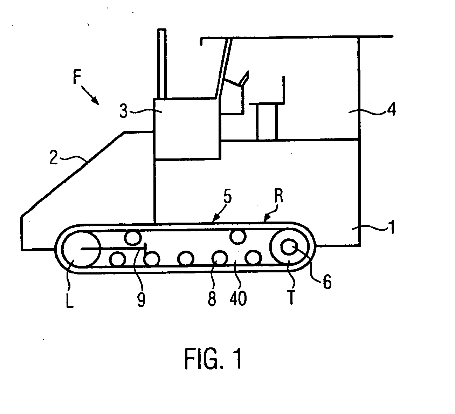

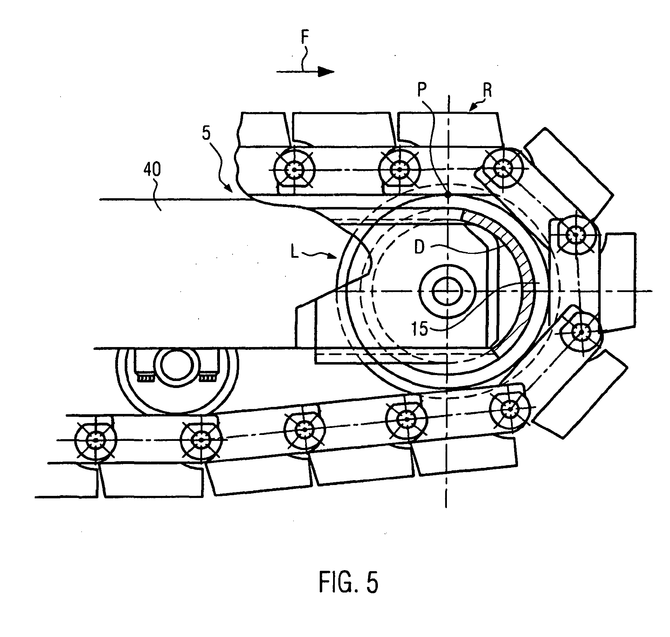

Ein in Fig. 1 schematisch dargestellter Straßenfertiger oder Beschicker F weist ein Chassis 1 mit einem vorneliegenden Materialbunker 2, einem höher platzierten Primärantriebsaggregat 3, beispielsweise einen Dieselmotor mit einem nicht gezeigten Pumpenverteilergetriebe für hydraulisch betätigbare Arbeitskomponenten, dahinter einen Führerstand 4 und unterseitig an jeder Seite ein Raupenfahrwerk 5 auf. Das Raupenfahrwerk 5 enthält ein Antriebskettenrad T (Turas), beispielsweise getrieben von einem Hydrostaten 6, sowie ein Leitrad L, die zusammen mit Stützrollen 8 an einer Tragkonstruktur 40 und in einer Raupenkette R platziert und über eine nicht gezeigte Aufhängung mit dem Chassis 1 verbunden sind. Das Leitrad L wird durch eine Spannvorrichtung 9 beaufschlagt, um die Raupenkette R unter erforderlicher Betriebsspannung zu halten (siehe auch Fig. 5).

Im Betrieb des Raupenfahrwerks 5 z.B. von Fig. 1 kommt es gemäß Fig. 5 zu einem Polygoneffekt, bei dem die Raupenkette R (Fahrtrichtung F) im Bereich eines Punktes P zyklisch Schläge z.B. auf einen Tragring 15 des Leitrades L ausübt, die in einem lauten Betriebsgeräusch resultieren, wenn sie metallisch bis in die Tragstruktur 40 übertragen werden.

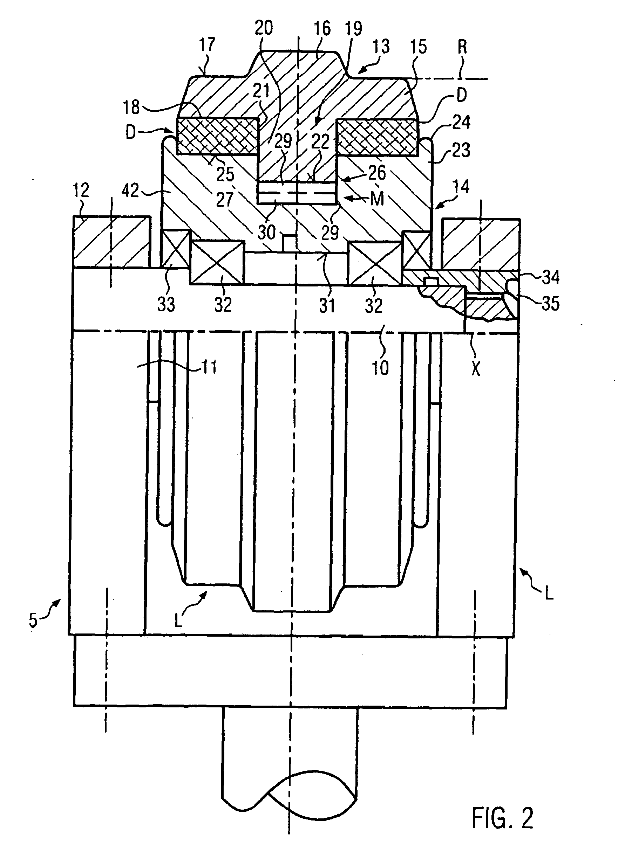

Fig. 2 zeigt eine Ausführungsform des beispielsweise in Fig. 1 verwendeten Leitrades L, das zur Verringerung des Betriebsgeräusches, hauptsächlich resultierend aus Schlägen der Raupenkette R aufgrund des Polygoneffektes, eine integrierte Dämpfung aufweist.

Es ist denkbar, im Raupenfahrwerk 5 sowohl das Leitrad L als auch das Antriebskettenrad T mit einer Dämpfung zu versehen, oder nur das Leitrad L oder nur das Antriebskettenrad T.

Das in Fig. 2 gezeigte Leitrad L ist auf einem eine Achse X definierenden Achszapfen 10 frei drehbar gelagert und zwischen Wangen 11 einer zur Spann- und Seitenabstützvorrichtung gehörenden Struktur angeordnet, an der eine Führungsgabel 12 angreift.

Das Leitrad L (aus Stahl oder Stahlguss) ist unterteilt in einen äußeren Teil 13 und einen inneren Teil 14. Zwischen diesen sind zwei ringförmige Dämpfungsschichten D aus dämpfendem Material (ein Elastomer und/oder Gummi, verstärkt oder unverstärkt) eingegliedert. Der äußere Teil 13 ist ein Tragring 15 mit annähernd T-förmigem Querschnitt, einem mittigen, umfänglichen erhabenen Führungsbund 16 und beidseits des Führungsbundes 16 angeordneten, zurückgesetzten Auflageschultern 17, auf denen bei dieser Ausführungsform die Raupenkette R mit Kettengliedteilen aufliegt. An der Unterseite des Tragrings 15 sind über einen axialen Zwischenabstand getrennt zwei zylindrische oder konische Stützflächen 18 vorgesehen, zwischen denen sich im Bereich des Zwischenraums eine erste Radialführungsstruktur 19 befindet. Die erste Radialführungsstruktur 19 wird beispielsweise durch einen einwärts vorstehenden Ringflansch 20 mit annähernd rechteckigem Querschnitt und radialen Seitenflächen 21 sowie einem Innenumfang 22 definiert.

Der innere Teil 14 ist eine Ringnabe 23 mit einer außenliegenden Krone 42, die breiter ist als der Tragring 15 und beidseits einer zweiten Radialführungsstruktur 26 zylindrische oder konische Stützflächen 25 aufweist, die außen an den Rändern der Ringnabe 23 von vorstehenden Ringflanschen 24 (oder Vorsprüngen) begrenzt sind. Die Ringflansche 24 umgreifen die Dämpfungsschichten D außen. Ihr Überstand ist geringer als die radiale Stärke der Dämpfungsschichten D. Die axiale Breite jeder Dämpfungsschicht D entspricht z.B. annähernd der Außenbreite des Führungsbundes 16. Die axiale Breite der Krone 42 entspricht z.B. annähernd dem Dreifachen der Außenbreite des Führungsbundes 16. Die radiale Stärke der Dämpfungsschichten D entspricht z.B. annähernd dem Überstand des Führungsbundes 16.

Die zweite Radialführungsstruktur 26 besteht bei der gezeigten Ausführungsform aus einer gegenüber den Stützflächen 25 zurückspringenden Ringnut 27 mit annähernd rechteckigem Querschnitt und radialen Innenflanken 28, zwischen denen die Außenwände des Ringflansches 20 ausschließlich radial beweglich geführt sind. Die Eindringtiefe des Ringflansches 20 in die Ringnut 30 ist geringer als die radiale Tiefe der Ringnut 30. Hierdurch ist eine radiale Gleitführung mit parallelen Führungsflächenpaaren gebildet.

Bei der gezeigten Ausführungsform ist als Option (nicht unbedingt für das Leitrad erforderlich) eine in Umfangsrichtung formschlüssige Mitnehmerverbindung M zwischen den äuβeren und inneren Teilen 13, 14 vorgesehen. Die Mitnehmerverbindung M ist durch mit radialem Spiel kämmende Verzahnungen 29, 30 gebildet, d.h., z.B. einen Innenzahnkranz am Innendurchmesser des Ringflansches 20 und einem Außenzahnkranz am Grund der Umfangsnut 27. Zweckmäßig handelt es sich um Zykloidenzahnkränze.

Bei einer nicht gezeigten Alternative könnte die Mitnehmerverbindung M durch Querbolzen gebildet werden, die ausgehend von der Ringnabe 23 den Ringflansch 20 durchsetzen. Die Querbolzen könnten in Hülsen mit dazwischenliegendem Dämpfungsmaterial eingebettet sein, oder in Bohrungen eingreifen, z.B. in der Ringnabe 23, die durch dämpfendes Material ausgekleidet sind.

Zur Drehlagerung des Leitrades L sind auf dem Achszapfen 10 Wälzlager 32 montiert, die außenseitig durch Dichtungen 33 abgedichtet und durch eine Spannmutter 34 auf dem Achszapfen 10 festgelegt sind. Für die Spannmutter 34 kann eine Verdrehsicherung 35 vorgesehen sein, beispielsweise indem die Spannmutter 34 einen kragenartigen Sicherungsring besitzt, der z.B. mit dem Achszapfen 10 verstemmt ist. Hier könnte auch eine Madenschraube gesetzt sein.

Von der Raupenkette R auf den äußeren Teil 13 ausgeübte Schläge werden hier von dem Führungsbund 16 und den Auflageschultern 17 direkt aufgenommen, jedoch nicht an die Ringnabe 23 übertragen, sondern in den Dämpfungsschichten D aufgezehrt, und zwar über das radiale Bewegungsspiel zwischen den ersten und zweiten Radialführungsstrukturen 19, 26 bzw. über das Zahnspiel zwischen den Verzahnungen 29, 30.

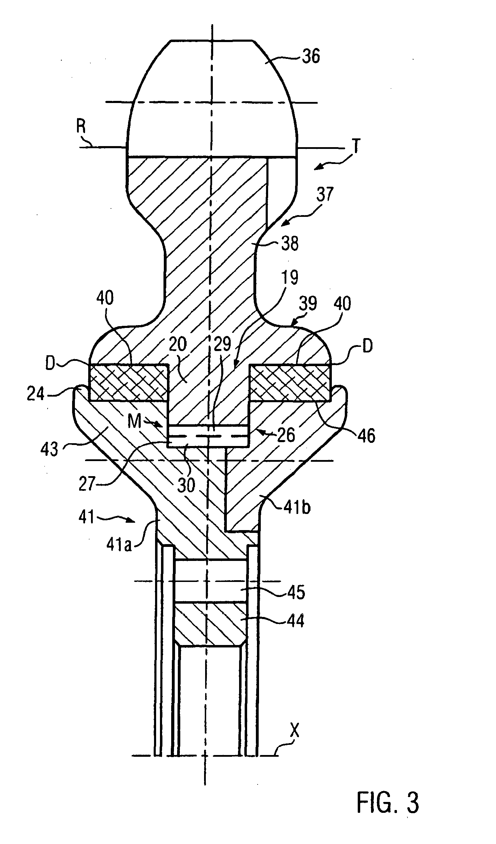

Fig. 3 zeigt eine Ausführungsform eines Antriebskettenrades T, das ebenfalls eine integrierte Dämpfung besitzt.

Das in Fig. 3 gezeigte Antriebskettenrad T (Turas) ist ähnlich wie das Leitrad L in Fig. 2, unterteilt in einen äußeren Teil 37 und einen inneren Teil 41, zwischen denen zwei axial separierte Dämpfungsschichten D vorgesehen sind. Der äußere Teil 37 ist eine Ringscheibe 38, die eine Umfangsverzahnung 36 trägt, die in die Raupenkette R dort zwischen Kettenglieder eingreift. An der Innenseite der Ringscheibe 38 ist ein verbreiterter Fußteil 39 geformt, an dessen Unterseite Stützflächen 40 (zylindrisch oder konisch) vorgesehen sind, zwischen denen sich die erste Radialführungsstruktur 19 befindet (analog zu Fig. 2). Der innere Teil 41 (aus Montagegründen gegebenenfalls bestehend aus zwei Teilen 41a, 41b) weist eine Krone 43 auf, die breiter ist als der Fußteil 39 und diesen mit den Ringflanschen 24 einfasst. Im inneren Teil 41 ist die zweite Radialführungsstruktur 26 analog zu Fig. 2 vorgesehen, und zwar zwischen mit einem Zwischenabstand platzierten zylindrischen oder konischen Stützflächen 46 für die Dämpfungsschichten D. Der innere Teil 41 setzt sich in einem Scheibenkörper 44 fort, in welchem Bohrungen 45 zum Übertragen des Antriebsdrehmomentes geformt sind.

Zwischen den inneren und äußeren Teilen 37, 41 ist auch in Fig. 3 eine in Umfangsrichtung formschlüssige Mitnehmerverbindung M vorgesehen, und zwar in Form der ineinandergreifenden Verzahnungen 29, 30, die ein radiales Eingriffsspiel haben, damit die Dämpfungsschichten D übertragene Schläge unter ausschließlich radialen Relativbewegungen zwischen den inneren und äußeren Teilen 37, 41 dämpfen können.

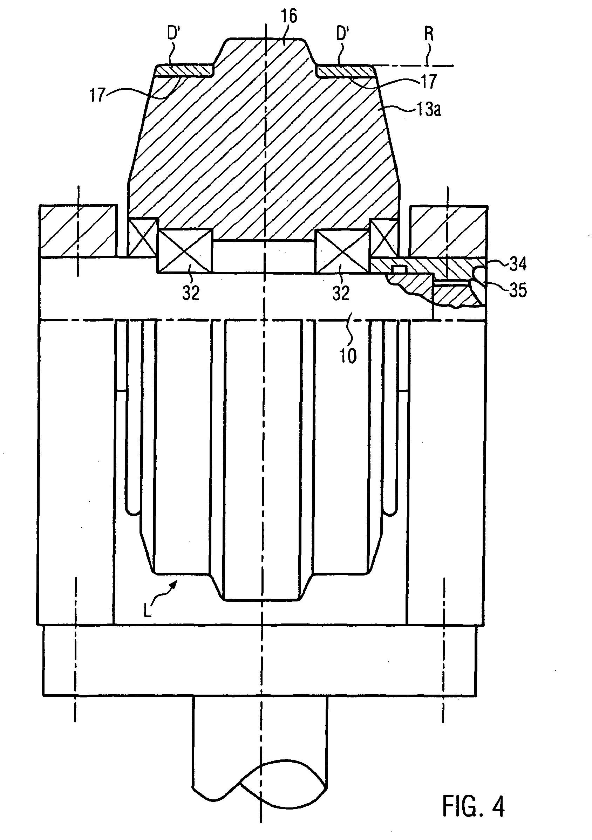

Die in Fig. 4 gezeigte, vereinfachte Ausführungsform des Leitrades L weist die nach Art von Bandagen ausgebildeten Dämpfungsschichten D' auf den Auflageschultern 17 zu beiden Seiten des Führungsbundes 16 auf, so dass der Führungsbund 16 einen Großteil der Lasten aufnimmt und überträgt, und die Dämpfungsschichten D nurmehr einen Teil der Gesamtlast und Schläge der Raupenkette R. Die Dämpfungsschichten D sind hier im Vergleich zu den Fig. 2 und 3 relativ dünn und jeweils mit einer axialen Breite annähernd der entsprechenden Außenbreite des Führungsbundes 16. Der äußere Teil 13a des Leitrades L ist analog zu Fig. 2 über Wälzlager 32 auf dem die Achse X definierenden Achszapfen 10 frei drehbar gelagert und durch die Spannmutter 34 und die Verdrehsicherung 35 gesichert. Der Führungsbund 16 überträgt Seitenführungskräfte auf den Achszapfen 10 und entlastet so die Dämpfungsschichten D'. Die Dämpfungsschichten D' sitzen fest auf den von den Auflageschultern 17 gebildeten Stützflächen, z.B. durch Aufschrumpfen oder Aufziehen, oder Verkleben, Aufvulkanisieren, Aufspritzen, Beschichten oder dgl..

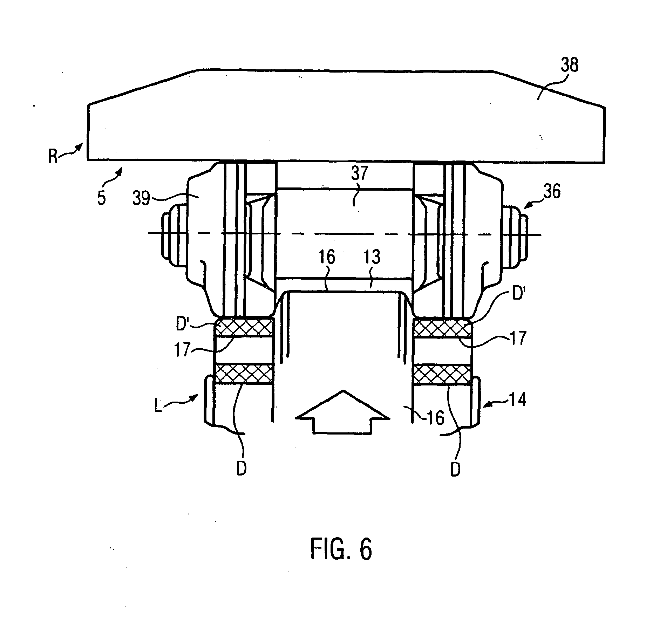

Fig. 6 zeigt in einer Ansicht ähnlich der von Fig. 2 eine Detailvariante eines Leitrades L, das grundsätzlich wie in Fig. 2 konzipiert ist. Im Unterschied zur Ausführungsform von Fig. 2 sind in Fig. 6 zusätzlich zwei axial separierte, gleichdurchmessrige Dämpfungsschichten D' auf den Auflageschultern 17 des äußeren Teiles 13 angebracht, die den Führungsbund 16 zwischen sich einschließen und beispielsweise etwa so stark und so breit sind wie die innenliegenden Dämpfungsschichten D zwischen den äußeren und inneren Teilen 13, 14 des Leitrades L.

Obwohl dieses Prinzip gut für ein Leitrad geeignet ist, können solche zusätzlichen Dämpfungsschichten D' auch bei einem Antriebskettenrad (etwa der Fig. 3) vorgesehen werden. Die Dämpfungsschichten D, D' können beispielsweise aus einem Polyurethan-Kautschuk mit einer Shore A-Härte zwischen etwa 80 und etwa 92 bestehen, und unverstärkt oder verstärkt sein. Die zusätzlichen Dämpfungsschichten D' können mit Übermaß aufgeschrumpft oder durch Beschichten aufgebracht sein.

In Fig. 6 ist von der Raupenkette R ein Laufpolster 38 gezeigt, der mit einem Kettenbolzen 37 eines Kettengelenks 36 und/oder Kettenlaschen 39 verbunden ist. Zumindest die Kettenlaschen 39 kontaktieren die zusätzlichen Dämpfungsschichten D', während der Führungsbund 16 zumindest fallweise Seitenführungskräfte für die Raupenkette R erzeugt, die über die in Fig. 6 nicht gezeigte radiale Gleitführung und die Drehlagerung des Leitrades in der Tragstruktur 40 (Fig. 1) aufgenommen werden.

## Patentansprüche

1. Raupenfahrwerk (5), insbesondere eines Straßenfertigers oder Beschickers (F), mit einem eine Umfangsverzahnung (36) aufweisenden, um eine Achse (X) drehantreibbaren Antriebskettenrad (T) und wenigstens einem um eine Achse (X) frei drehbaren Leitrad (L) im Inneren einer Raupenkette (R), wobei das Leitrad (L) an zumindest einer Seite eines mittigen, erhabenen Führungsbundes (16) eine tiefergesetzte umfängliche Auflageschulter (17) aufweist und das Antriebskettenrad (T) und/oder Leitrad (L) zwischen der Achse (X) und der Raupenkette (R) in koaxiale innere und äußere Teile (13, 14; 37, 41) unterteilt sind und zwischen den inneren und äußeren Teilen zumindest zwei axial separierte, dämpfendes Material aufweisende Dämpfungsschichten (D) angeordnet und die inneren und äußeren Teile (13, 14; 37, 41) über die Dämpfungsschichten (D) relativ zueinander beweglich sind, **dadurch gekennzeichnet, dass** die inneren und äuβeren Teile (13, 14; 37, 41) relativ zur Achse (X) radial ineinander gleitend geführt sind, dass der äußere Teil (37) des Antriebskettenrades (T) die Umfangsverzahnung (36) aufweist und als einteilige oder aus Segmenten zusammengesetzte metallische Ringscheibe (38) mit einem innenliegenden, umfänglichen Fußteil (39) mit wenigstens einer ersten Radialführungsstruktur (19) ausgebildet ist, dass der innere Teil (41) des Antriebskettenrades (T) eine zum Fußteil (39) passende, umfängliche Krone (43) mit wenigstens einer zur ersten Radialführungsstruktur (19) passenden, zweiten Radialführungsstruktur (26) aufweist, dass am Fußteil (39) und der Krone (43) zumindest an einer axialen Seite der Radialführungsstruktur zueinander weisende zylindrische oder konische Stützflächen (40, 46) vorgesehen sind, dass die Dämpfungsschichten (D) zwischen den Stützflächen (40, 46) angeordnet sind, und dass die ersten und zweiten Radialführungsstrukturen (19, 26) eine ausschließlich mit radialem Bewegungsspiel ineinandergreifende Gleitführung bilden.

2. Raupenfahrwerk (5), insbesondere eines Straßenfertigers oder Beschickers (F), mit einem eine Umfangsverzahnung (36) aufweisenden, um eine Achse (X) drehantreibbaren Antriebskettenrad (T) und wenigstens einem um eine Achse (X) frei drehbaren Leitrad (L) im Inneren einer Raupenkette (R), wobei das Leitrad (L) an zumindest einer Seite eines mittigen, erhabenen Führungsbundes (16) eine tiefergesetzte umfängliche Auflageschulter (17) aufweist und das Antriebskettenrad (T) und/oder das Leitrad (L) zwischen der Achse (X) und der Raupenkette (R) in koaxiale innere und äußere Teile (13, 14; 37, 41) unterteilt sind und zwischen den inneren und äußeren Teilen zumindest zwei axial separierte, dämpfendes Material aufweisende Dämpfungsschichten (D) angeordnet und die inneren und äußeren Teile (13, 14; 37, 41) über die Dämpfungsschichten (D) relativ zueinander beweglich sind, **dadurch gekennzeichnet, dass** die inneren und äußeren Teile (13, 14; 37, 41) relativ zur Achse (X) radial ineinander gleitend geführt sind, dass an dem Antriebskettenrad (T) und/oder Leitrad (L) an dem äußeren Teil (14; 37) zusätzlich zwei außenliegende, in axialer Richtung durch einen Zwischenabstand separierte, ringförmige Dämpfungsschichten (D') mit annähernd gleichen Durchmessern vorgesehen sind, dass im Bereich des Zwischenabstandes die mit der Raupenkette (R) in direkten Kontakt tretende, metallische Umfangsverzahnung (36) bzw. der Führungsbund (16) angeordnet ist, die bzw. der über die außenliegenden Dämpfungsschichten (D') nach außen vortritt, dass der den Führungsbund (16) und beidseitige Auflageschultern (17) aufweisende äußere Teil (13) des Leitrades (L) als Tragring (15) mit wenigstens einer innenseitigen, ersten Radialführungsstruktur (19) und zylindrischen oder konischen Stützflächen (18) beidseits der ersten Radialführungsstruktur (19) ausgebildet ist, dass der auf der Achse (X) drehbar gelagerte innere Teil (14) des Leitrades (L) als Ringnabe (23) mit wenigstens einer zur ersten Radialführungsstruktur (19) passenden zweiten Radialführungsstruktur (26) und zylindrischen oder konischen Stützflächen (25) beidseits der zweiten Radialführungsstruktur (26) in einer zum Tragring (15) passenden, umfänglichen Krone (42) ausgebildet ist, dass jeweils eine Dämpfungsschicht (D) zwischen den Stützflächen (18, 25) angeordnet ist, und dass die ersten und zweiten Radialführungsstrukturen (19, 26) eine ausschließlich mit radialem Bewegungsspiel ineinandergreifende Gleitführung bilden.

3. Raupenfahrwerk nach Anspruch 1 oder 2, **dadurch gekennzeichnet, dass** das dämpfende Material der Dämpfungsschicht (D) verstärkten oder unverstärkten Elastomer, wie Polyurethan oder Gummi umfasst.

4. Raupenfahrwerk nach Anspruch 1 oder 2, **dadurch gekennzeichnet, dass** die Gleitführung axial mittig angeordnet ist.

5. Raupenfahrwerk nach Anspruch 1 oder 2, **dadurch gekennzeichnet, dass** die Krone (42, 43) axial breiter ist als der Fußteil (39) bzw. der Tragring (15), und an den Rändern radial nach auβen vorspringende Ringflansche (24) aufweist, deren Überstand geringer ist als die radiale Stärke der Dämpfungsschicht (D).

6. Raupenfahrwerk nach Anspruch 1 oder 2, **dadurch gekennzeichnet, dass** zwischen den inneren und äußeren Teilen (13, 14; 37, 41), vorzugsweise zwischen den ersten und zweiten Radialführungsstrukturen (19, 26) als eine in Umfangsrichtung formschlüssige, in Radialrichtung spielbehaftete Mitnehmerverbindung (M) ineinandergreifende Verzahnungen (29, 30) vorgesehen sind.

7. Raupenfahrwerk nach Anspruch 2, **dadurch gekennzeichnet, dass** die Ringnabe (23) des Leitrades (L) über außenseitig abgedichtete Wälzlager (32) auf einem die Achse (X) definierenden Achszapfen (10) abgestützt und an wenigstens einer Seite über eine Spannmutter (34) besichert ist.

8. Raupenfahrwerk nach wenigstens einem der vorhergehenden Ansprüche, **dadurch gekennzeichnet, dass** die inneren und äußeren Teile (13, 14; 37, 41) des Leitrades (L) oder des Antriebskettenrades (T) aus Stahl oder Stahlguss bestehen.

9. Raupenfahrwerk nach Anspruch 1 oder 2, **dadurch gekennzeichnet, dass** die erste Radialführungsstruktur (19) im äußeren Teil ein von der Stützfläche einwärts vorstehender Ringflansch (20) mit annähernd rechteckigem Querschnitt ist, und dass die zweite Radialführungsstruktur (26) im inneren Teil eine gegenüber der Stützfläche einwärts vertiefte Ringnut (27) mit annähernd rechteckigem Querschnitt ist.

10. Raupenfahrwerk nach Anspruch 6, **dadurch gekennzeichnet, dass** die Verzahnungen (29, 30) der Mitnehmerverbindung (M) ein Innenzahnkranz an einem Ringflansch (20) und ein Auβenzahnkranz am Grund einer Ringnut (27) sind, vorzugsweise jeweils ein durch Fräsen, Stoβen oder Räumen hergestellter Zykloidenzahnkranz.

## Claims

1. Track assembly (5), in particular of a road paver or road paver feeder (F), comprising a drive chain wheel (T) having a circumferential toothing (36) and being rotatably driven about an axis (X), and at least one idler wheel (L) freely rotating about an axis (X), both inside a caterpillar chain (R), wherein the idler wheel (L) comprises at least at one side of a central raised guiding land (16) a lowered circumferential bearing shoulder (17) and wherein the drive chain wheel (T) and/or the idler wheel (L) are sub-divided between the axis (X) and the caterpillar chain (R) into coaxial inner and outer parts (13, 14; 37, 41), and wherein between the inner and outer parts at least two axially spaced apart damping layers (D) containing damping material are provided, and wherein the inner and outer parts (13, 14; 37, 41) are moveable in relation to each other by virtue of the ring-shaped damping layers (D), **characterised in that** the inner and outer parts (13, 14; 37, 41) are guided relative to the axis (X) to slide within each other radially, that the outer part (37) of the drive chain wheel (T) comprises the circumferential toothing (36) and is formed as a metallic ring disk with an interior circumferential foot part (39) having at least a first radial guiding structure (19) which ring disk is either unitary or is combined from segments, that the inner part (41) of the drive chain wheel (T) has a circumferential crown (43) fitting to the foot part (39) and carrying at least one second radial guiding structure (26) matching with the first radial guiding structure (19), that at the foot part (39) and the crown (42) at least at one axial side of the radial guiding structure cylindrical or conical support surfaces (40, 46) are arranged which face towards each other, that the ring-shaped damping layers (D) are arranged between the support surfaces (40, 46), and that the first and second radial guiding structures (19, 26) form a slide guide interengaging exclusively with radial movement clearance.

2. Track assembly (5), in particular of a road paver or road paver feeder (F), comprising a drive chain wheel (T) having a circumferential toothing (36) and being rotatably driven about an axis (X), and at least one idler wheel (L) freely rotating about an axis (X), both inside a caterpillar chain (R), wherein the idler wheel (L) comprises at least at one side of a central raised guiding land (16) a lowered circumferential bearing shoulder (17) and wherein the drive chain wheel (T) and/or the idler wheel (L) are sub-divided between the axis (X) and the caterpillar chain (R) into coaxial inner and outer parts (13, 14; 37, 41), and wherein between the inner and outer parts at least two axially spaced apart damping layers (D) containing damping material are provided, and wherein the inner and outer parts (13, 14; 37, 41) are moveable in relation to each other by virtue of the ring-shaped damping layers (D), **characterised in that** the inner and outer parts (13, 14; 37, 41) are guided relative to the axis (X) such that they slide radially within each other, that at the drive chain wheel (T) and/or the idler wheel (L) at the outer part (14; 37) additionally two exterior ring-shaped damping layers (D') having substantially equal diameters are provided, which are separated in axial direction by an intermediate distance, that in the region of the intermediate distance the metallic circumferential toothing (36) or the guiding land (16) is arranged which directly contacts the caterpillar chain (R) and protrudes outwardly beyond the exterior damping layers (D'), that the outer part (13) of the idler wheel (L) comprising the guiding land (16) and bearing shoulders (17) on both sides of the guiding land (16) is formed as a carrying ring (15) with at least one interior first radial guiding structure (19) and cylindrical or conical support surfaces (18) at both sides of the first radial guiding structure (19), that the inner part (14) of the idler wheel (L) which is rotatably supported on the axis (X) is formed as ring hub (23) with at least one second radial guiding structure (26) matching with the first radial guiding structure (19) and having cylindrical or conical support surfaces (25) at both sides of the second radial guiding structure (26) in a circumferential crown matching the carrying ring (15), that a respective damping laying (D) is arranged between the support surfaces (18, 25), and that the first and second radial guiding structures (19, 26) form a slide guide interengaging exclusively with radial movement clearance.

3. Track assembly according to claim 1 or 2, **characterised in that** the damping material of the damping layer (D) comprises reinforced or non-enforced elastomer like polyurethane or rubber.

4. Track assembly according to claim 1 or 2, **characterised in that** the slide guide is arranged axially centrally.

5. Track assembly according to claim 1 or 2, **characterised in that** the crown (42, 43) is axially wider than the foot part (39) or the carrying ring (15), and that the crown (42, 43) has ring flanges (26) protruding radially outwardly from the edges, the protrusion of which ring flanges (26) is shorter than the radial thickness of the damping layer (D).

6. Track assembly according to claim 1 or 2, **characterised in that** between the inner and outer parts (13, 14; 37, 41), preferably between the first and second radial guiding structures (19, 26), a drive coupling connection (M) is provided which is acting circumferential with a form-fit and has a clearance in radial direction and consists of meshing toothings (29, 30).

7. Track assembly according to claim 2, **characterised in that** the ring hub (23) of the idler wheel (L) is supported on a pin (10) defining the axis (X) via roller bearings (32) which are sealed to the exterior, and that the ring hub (23) is secured at least at one side by a tensioning nut (34).

8. Track assembly according to at least one of the preceding claims, **characterised in that** the inner and outer parts (13, 14; 37, 41) of the idler (L) or of the drive chain wheel (T) consist of steel or cast steel material.

9. Track assembly according to claim 1 or 2, **characterised in that** the first radial guiding structure (19) in the outer part is a ring flange (20) having a substantially square cross-section and protruding inwardly from the support surface, and that the second radial guiding structure (26) in the inner part is a ring groove (27) having a substantially square cross-section and being recessed inwardly relative to the support surface.

10. Track assembly according to claim 6, **characterised in that** the toothings (29, 30) of the drive coupling connection (M) consist of an inner gearing at a ring flange (20) and an outer gearing at the bottom of a ring groove (27), preferably respectively a cycloid gearing manufactured by milling, butting or broaching.

## Revendications

1. Train de roulement à chenille (5), notamment d'un finisseur de route ou d'un alimentateur (F), comprenant une roue dentée d'entraînement ou barbotin (T), qui présente une denture périphérique (36) et peut être entraîné en rotation autour d'un axe (X), et au moins une roue de guidage ou roue folle (L) librement tournante autour d'un axe (X) à l'intérieur d'une chenille de roulement (R), train de roulement dans lequel la roue folle (L) présente, sur au moins un côté d'un boudin de guidage central (16), surélevé, un épaulement d'appui périphérique (17) plus bas, et le barbotin (T) et/ou la roue folle (L) sont subdivisés, entre l'axe (X) et la chenille de roulement (R), en parties intérieures et extérieures (13, 14; 37, 41), coaxiales, et entre les parties intérieures et extérieures sont agencées au moins deux couches d'amortissement (D) axialement séparées, qui comportent un matériau d'amortissement, et les parties intérieures et extérieures (13, 14; 37, 41) sont mobiles relativement les unes par rapport aux autres par l'intermédiaire des couches d'amortissement (D),
**caractérisé**
**en ce que** les parties intérieures et extérieures (13, 14; 37, 41) sont guidées de manière à pouvoir coulisser radialement l'une dans l'autre par glissement, par rapport à l'axe (X),
**en ce que** la partie extérieure (37) du barbotin (T) comporte la denture périphérique (36) et est réalisée sous la forme d'un disque annulaire métallique (38) d'un seul tenant ou constitué d'un assemblage de segments, qui comporte une partie d'embase périphérique (39) située à l'intérieur et présentant au moins une première structure de guidage radial (19),
en que la partie intérieure (41) du barbotin (T) comporte une couronne périphérique (43) adaptée à la partie d'embase (39) et comportant au moins une deuxième structure de guidage radial (26) adaptée à la première structure de guidage radial (19),
**en ce que** sur la partie d'embase (39) et sur la couronne (43) sont prévues, sur au moins un côté axial de la structure de guidage radial, des surfaces d'appui cylindriques ou coniques (40, 46) dirigées l'une vers l'autre,
**en ce que** les couches d'amortissement (D) sont agencées entre les surfaces d'appui (40, 46),
et **en ce que** les première et deuxième structures de guidage radial (19, 26) forment un guidage de glissement s'effectuant par engagement réciproque l'une dans l'autre et présentant uniquement un jeu de mouvement radial.

2. Train de roulement à chenille (5), notamment d'un finisseur de route ou d'un alimentateur (F), comprenant une roue dentée d'entraînement ou barbotin (T), qui présente une denture périphérique (36) et peut être entraîné en rotation autour d'un axe (X), et au moins une roue de guidage ou roue folle (L) librement tournante autour d'un axe (X) à l'intérieur d'une chenille de roulement (R), train de roulement dans lequel la roue folle (L) présente, sur au moins un côté d'un boudin de guidage central (16), surélevé, un épaulement d'appui périphérique (17) plus bas, et le barbotin (T) et/ou la roue folle (L) sont subdivisés, entre l'axe (X) et la chenille de roulement (R), en parties intérieures et extérieures (13, 14; 37, 41), coaxiales, et entre les parties intérieures et extérieures sont agencées au moins deux couches d'amortissement (D) axialement séparées, qui comportent un matériau d'amortissement, et les parties intérieures et extérieures (13, 14; 37, 41) sont mobiles relativement les unes par rapport aux autres par l'intermédiaire des couches d'amortissement (D), **caractérisé**
**en ce que** les parties intérieures et extérieures (13, 14; 37, 41) sont guidées de manière à pouvoir coulisser radialement l'une dans l'autre par glissement, par rapport à l'axe (X),
**en ce que** sur le barbotin (T) et/ou la roue folle (L), sur la partie extérieure (14; 37), sont prévues en supplément, deux couches d'amortissement (D') de forme annulaire, sensiblement de même diamètre, qui sont situées à l'extérieur et séparées par un espace intermédiaire dans la direction axiale,
**en ce que** dans la zone de l'espace intermédiaire est agencé la denture périphérique métallique (36), respectivement le boudin de guidage (16), qui entrent en contact direct avec la chenille de roulement (R), et font saillie, vers l'extérieur, des couches d'amortissement (D') situées à l'extérieur,
**en ce que** la partie extérieure (13) de la roue folle (L), qui comporte le boudin de guidage (16) et les épaulements d'appui (17) situés de part et d'autre, est réalisée sous forme d'anneau porteur (15) avec au moins une première structure de guidage radial (19) du côté intérieur, et des surfaces d'appui (18) cylindriques ou coniques de part et d'autre de la première structure de guidage radial (19),
**en ce que** la partie intérieure (14) de la roue folle (L), qui est montée rotative sur l'axe (X), est réalisée en tant que moyeu annulaire (23) avec au moins une deuxième structure de guidage radial (26) adaptée à la première structure de guidage radial (19), et des
surfaces d'appui (25) cylindriques ou coniques de part et d'autre de la deuxième structure de guidage radial (26) dans une couronne périphérique (42) adaptée à l'anneau porteur (15),
**en ce qu'**une couche d'amortissement (D) est respectivement agencée entre les surfaces d'appui (18, 25),
et **en ce que** les première et deuxième structures de guidage radial (19, 26) forment un guidage de glissement s'effectuant par engagement réciproque l'une dans l'autre et présentant uniquement un jeu de mouvement radial.

3. Train de roulement à chenille selon la revendication 1 ou la revendication 2, **caractérisé en ce que** le matériau d'amortissement de la couche d'amortissement (D) comprend un élastomère, comme le polyuréthanne ou le caoutchouc, renforcé ou non renforcé.

4. Train de roulement à chenille selon la revendication 1 ou la revendication 2, **caractérisé en ce que** le guidage de glissement est agencé de manière axialement centrée.

5. Train de roulement à chenille selon la revendication 1 ou la revendication 2, **caractérisé en ce que** la couronne (42, 43) est axialement plus large que la partie d'embase (39) respectivement l'anneau porteur (15), et présente, au niveau des bords, des flasques annulaires (24) en saillie radiale vers l'extérieur, et dont le dépassement en saillie est inférieur à l'épaisseur radiale de la couche d'amortissement (D).

6. Train de roulement à chenille selon la revendication 1 ou la revendication 2, **caractérisé en ce qu'**entre les parties intérieures et extérieures (13, 14; 37, 41), de préférence entre les première et deuxième structures de guidage radial (19, 26), sont prévues des dentures (29, 30) engrenant mutuellement sous la forme d'une liaison d'entraînement (M) par complémentarité de formes dans la direction périphérique et affectée de jeu dans la direction radiale.

7. Train de roulement à chenille selon la revendication 2, **caractérisé en ce que** le moyeu annulaire (23) de la roue folle (L) est supporté, par l'intermédiaire de paliers à roulement (32) étanches vers l'extérieur, sur un tourillon d'axe (10) définissant l'axe (X), et sont arrêtés sur au moins un côté par l'intermédiaire d'un écrou de serrage (34).

8. Train de roulement à chenille selon l'une au moins des revendications précédentes, **caractérisé en ce que** les parties intérieures et extérieures (13, 14; 37, 41) de la roue folle (L) ou du barbotin (T) sont réalisées en acier ou en acier moulé.

9. Train de roulement à chenille selon la revendication 1 ou la revendication 2, **caractérisé en ce que** la première structure de guidage radial (19) est, dans la partie extérieure, un flasque annulaire (20) qui fait saillie de la surface d'appui, vers l'intérieur, et est d'une section transversale approximativement rectangulaire, et **en ce que** la deuxième structure de guidage radial (26) est, dans la partie intérieure, une rainure annulaire (27) en creux vers l'intérieur par rapport à la surface d'appui, et présentant une section transversale approximativement rectangulaire.

10. Train de roulement à chenille selon la revendication 6, **caractérisé en ce que** les dentures (29, 30) de la liaison d'entraînement (M) sont constituées par une couronne dentée intérieure sur un flasque annulaire (20), et par une couronne dentée extérieure sur le fond d'une rainure annulaire (27), de préférence chacune par une couronne dentée cycloïdale fabriquée par fraisage, mortaisage ou brochage.
